# EUROPÄISCHE PATENTANMELDUNG

(11) **EP 4 275 947 A1**
(43) Veröffentlichungstag der Anmeldung: **15.11.2023**
(21) Anmeldenummer: 23172569.8
(22) Anmeldetag: 10.05.2023
(51) Int. Cl.: B60L 53/18

(54) **BIDIREKTIONALE MOBILE LADEVORRICHTUNG FÜR ELEKTRISCHE FAHRZEUGE**

(30) Priorität: 10.05.2022 DE 102022111567
(71) Anmelder: HagerEnergy GmbH, 49076 Osnabrück (DE)
(72) Erfinder: PIEPENBRINK, Andreas, 49084 Osnabrück (DE); LESCOW, Nicolai, 49082 Osnabrück (DE)
(74) Vertreter: Lenzing Gerber Stute

(57) **Zusammenfassung**

Die Erfindung betrifft ein einphasiges Ladekabel (1) für ein Elektrofahrzeug (2), mit einem einphasigen Netzstecker (4), mit einem in dem Elektrofahrzeug (2) verriegelbaren Ladestecker (8) und mit einer Ladeelektronik (6), die elektrisch zwischen dem Netzstecker (4) und dem Ladestecker (8) angeordnet ist, wobei die Ladeelektronik (6) einen bidirektionalen AC/DC-Wandler (10) und wenigstens einen bidirektionalen DC/DC-Wandler (11, 12) umfasst.

## Beschreibung

Die vorliegende Erfindung betrifft ein Ladekabel mit den Merkmalen des Oberbegriffs des Anspruchs 1 sowie eine Ladevorrichtung für ein elektrisches Kraftfahrzeug und eine mobile Stromversorgungsvorrichtung.

An privaten Ladestationen an Wohngebäuden, in Garagen oder in Tiefgaragen werden häufig sogenannte Wallboxen für das Laden von elektrisch betriebenen Kraftfahrzeugen installiert. Diese Wallboxen sind dreiphasig an das öffentliche Niederspannungsnetz angeschlossen. Sie stellen eine Ladeleistung in der Größenordnung von etwa 11 kW bis 22 kW zur Verfügung. Zur Einspeisung von elektrischer Energie aus dem Kraftfahrzeug in das öffentliche Netz oder in eine im Gebäude vorhandene Pufferbatterie kann eine Wallbox optional auch bidirektional ausgeführt sein. Die dann dem Fahrzeugakkumulator entnommene Leistung ist in der Regel größer als 2,5 kW, da bei geringeren Entladeleistungen die Effizienz der elektrischen Umwandlung von der im Fahrzeug vorliegenden Gleichspannung in die Wechselspannung des Niederspannungsnetzes ansonsten deutlich sinkt. Aus Gründen der Effizienz wird auch das Laden des Kraftfahrzeugs im Allgemeinen erst bei einer zur Verfügung stehenden Leistung von etwa 4,5 kW begonnen.

Die bei dieser Lösung fließenden elektrischen Leistungen sind wesentlich größer als der durchschnittliche Strombedarf eines Haushalts oder eines Einfamilienhauses. Die erforderliche minimale Ladeleistung im dreiphasigen Betrieb ist in vielen Fällen auch größer als die üblicherweise zur Verfügung stehende Leistung einer Fotovoltaikanlage. Die Wallboxen sind wandhängend ausgeführt. Die darin enthaltene Leistungselektronik ist aufwändig und entsprechend teuer, ebenso wie der Installationsaufwand für den Anschluss einer solchen Wallbox an das dreiphasige Niederspannungsnetz relativ groß ist.

Aus dem Stand der Technik sind auch sogenannten Notladekabel bekannt, die einen nicht verriegelbaren einphasigen Netzstecker und einen unidirektionalen AC/DC-Wandler aufweisen. Diese Ladekabel sind portabel, jedoch nur zum Laden eines elektrischen Fahrzeugs an einer Haushaltssteckdose geeignet. Insbesondere ist keine Einspeisung in das Niederspannungsnetz möglich.

Es ist deshalb Aufgabe der vorliegenden Erfindung, eine portable Ladeeinrichtung für elektrische Kraftfahrzeuge zu schaffen, die einen geringeren Installationsaufwand erfordert, die preiswerter ist und die mit geringeren Leistungen arbeitet.

Diese Aufgabe wird von einem Ladekabel mit den Merkmalen des Anspruchs 1 und von einer Ladevorrichtung mit den Merkmalen des Anspruchs 12 gelöst.

Weil bei einem einphasigen Ladekabel für ein Elektrofahrzeug, mit einem einphasigen Netzstecker, mit einem in dem Elektrofahrzeug verriegelbaren Ladestecker und mit einer Ladeelektronik, die elektrisch zwischen dem Netzstecker und dem Ladestecker angeordnet ist, zusätzlich vorgesehen ist, die Ladeelektronik einen bidirektionalen AC/DC-Wandler und wenigstens einen bidirektionalen DC/DC-Wandler umfasst, ist außer dem Laden des Fahrzeugs auch ein sicheres Entladen der Batterie des Fahrzeugs möglich. Insbesondere kann die Batterie auch zur Netzstützung nach VDE AR 4105 genutzt werden, indem die Einrichtung elektrische Leistung einspeist oder Blindleistung zur Verfügung stellt.

Die Ladeelektronik ist bevorzugt in einem einzigen gemeinsamen Gehäuse angeordnet. Vorzugsweise ist die Ladeelektronik in einem wassergeschützten oder wasserdichten und staubgeschützten oder staubdichten Gehäuse angeordnet, das mit dem fahrzeugseitigen Kabel und mit dem netzseitigen Kabel fest verbunden ist, insbesondere wasserdicht und staubdicht.

Besonders sicher einsetzbar wird das Ladekabel, wenn der Netzstecker ein verriegelbarer Netzstecker ist. Dadurch kann erreicht werden, dass die elektrische Verbindung nicht unter Last getrennt werden kann. Bei Nutzung einer entsprechenden verriegelbaren Steckdose ist dann Sicherheit nach DIN VDE 0100-551 gewährleistet.

Das Ladekabel ist für einen einfachen Anschluss an eine einphasige Standard-Steckdose geeignet, wenn der AC/DC-Wandler für einen Anschluss an ein Niederspannungsnetz mit einer Phase und einer Nennspannung von 220 V bis 240 V eingerichtet ist. Wenn der DC/DC-Wandler zum Anschluss an ein elektrisch betriebenes Kraftfahrzeug mit einer Gleichspannung von 200 V bis 920 V eingerichtet ist, kann auf der Anschlussseite des Fahrzeugs nahezu jede Fahrzeugbatterie mit Gleichspannung geladen werden.

Bevorzugt weist die Ladeelektronik eine Kommunikationsschnittstelle zur bidirektionalen Kommunikation mit dem Kraftfahrzeug auf, insbesondere mit dem Batteriemanagementsystem des Kraftfahrzeugs. Dadurch kann beidseitig die Ladebereitschaft kommuniziert werden, ebenso das Ergebnis einer Isolationsprüfung und der Status des Lade- und Entlademanagements. In ähnlich vorteilhafter Weise kann die Ladeelektronik eine Kommunikationsschnittstelle zur bidirektionalen Kommunikation mit dem Netzanschluss aufweisen Dadurch werden die Betriebssicherheit, die Steuerung von Laden und Entladen sowie die Netzdienlichkeit der Fahrzeugbatterie verbessert.

Wenn in dem Ladekabel der AC/DC-Wandler mit einem ersten DC/DC-Wandler verbunden ist, und der erste DC/DC-Wandler mit einem zweiten DC/DC-Wandler verbunden ist, kann jede dieser Komponenten für ihren Zweck optimiert werden. Dadurch kann eine Gewichtsersparnis ebenso erzielt werden wie Optimierung der Funktion der gesamten Vorrichtung.

Der in der Ladeelektronik des Ladekabels vorgesehene erste DC/DC-Wandler kann ein galvanisch nicht trennender Gleichspannungswandler mit einem variablen Spannungsverhältnis zwischen Eingangsspannung und Ausgangsspannung von 1:3 bis 1:5 sein. Dadurch kann sekundärseitig ein großer Spannungsbereich zur Verfügung gestellt werden, wie er für verschiedene Fahrzeugbatterien in der Praxis vorkommen kann. Ein Kostenvorteil ergibt sich, wenn bei diesem Wandler auf eine galvanische Trennung verzichtet werden kann.

Wenn weiter der zweite DC/DC-Wandler ein galvanisch trennender Gleichspannungswandler mit einem Spannungsverhältnis zwischen Eingangsspannung und Ausgangsspannung von 1:1 bis 1:2 ist, kann dieser Wandler klein und preiswert ausgeführt werden. Vorzugsweise ist der zweite DC/DC-Wandler ein LLC-Wandler.

Wenn bei einer Ladevorrichtung mit einem wie oben beschriebenen Ladekabel netzseitig eine einphasige Steckdose vorgesehen ist, die an einen Endstromkreis angeschlossen ist, ist auch die elektrische Sicherheit im Einspeisebetrieb gewährleistet. Dann ist insbesondere auch ein Notstrombetrieb für das Gebäude bei Netzausfall möglich. Bevorzugt weist die Ladevorrichtung gebäudeseitig eine mechanisch oder elektrisch verriegelbare Steckdose auf. Dadurch wird elektrische Sicherheit vor dem Verbinden und beim Trennen von Ladekabel und Niederspannungsnetz in der Netzsteckdose sichergestellt.

Außerdem ist es Aufgabe der Erfindung, eine mobile Stromversorgungsvorrichtung zu schaffen. Diese Aufgabe wird gelöst von einer Vorrichtung mit den Merkmalen des Anspruchs 14. Sie weist ein Ladekabel auf wie oben beschrieben und einen Adapter, an den wenigstens eine einphasige Steckdose angeschlossen ist. Mit dieser Stromversorgungsvorrichtung kann ein Elektrofahrzeug über das angeschlossene bidirektionale Ladekabel und den Adapter genutzt werden, um aus der Traktionsbatterie des Fahrzeugs einen "Haushaltsstrom" für Elektrogeräte zur Verfügung zu stellen.

In einer solchen Konstellation muss die Elektronik des Ladekabels mit der Fahrzeugelektronik kommunizieren, damit die Fahrzeugelektronik die Entladefunktion freigibt. Die fahrzeugseitige Verbindung ist im Ruhezustand spannungslos. Wenn das Ladekabel an das Fahrzeug angeschlossen wird, kann die Kabelelektronik nur dann mit dem Fahrzeug kommunizieren, wenn sie selbst eine Spannung zur Initialisierung zur Verfügung stellt.

Diese kann aus einer in der Elektronik selbst vorgesehenen vorhandenen Spannungsquelle erzeugt werden, beispielsweise einer auswechselbaren Batterie oder einem relativ kleinen Akkumulator, der im Betrieb wieder aufgeladen wird.

Es kann auch vorgesehen sein, dass die Kabelelektronik hierzu einen externen Eingang, zum Beispiel für eine 12 V Spannungsquelle, aufweist. Dabei kommt die externe Spannung vorzugsweise aus einer vom Fahrzeug selbst zur Verfügung gestellten Kleinspannung, wie sie aus 12 Volt Gerätesteckdosen, Zigarettenanzünderbuchsen oder USB-Steckdosen entnommen werden kann.

Bei einwandfreier Verbindung wird die Entladung der Fahrzeugbatterie freigeben.

Nachfolgend wird ein Ausführungsbeispiel der vorliegenden Erfindung anhand der Zeichnung näher beschrieben. Dabei zeigen:
- Fig. 1:: eine schematische Topologie eines Ladekabels zur bidirektionalen, einphasigen Verbindung eines elektrischen Kraftfahrzeugs mit einem gebäudeseitigen Niederspannungsnetz;
- Fig. 2:: die Ladeelektronik des Ladekabels in einer detaillierteren Darstellung;
- Fig. 3:: ein anderes Ausführungsbeispiel einer Ladeelektronik des Ladekabels;
- Fig. 4:: eine schematische Darstellung des Fahrzeugs und des bidirektionalen Ladekabels bei der Verwendung als Stromquelle mittels eines Adapters;
- Fig. 5:: eine Ladeelektronik entsprechend Fig. 2, die netzseitig für ein Einphasen-Dreileiternetz ausgelegt ist; sowie
- Fig. 6:: eine Ladeelektronik entsprechend Fig. 3, die netzseitig für ein Einphasen-Dreileiternetz ausgelegt ist.

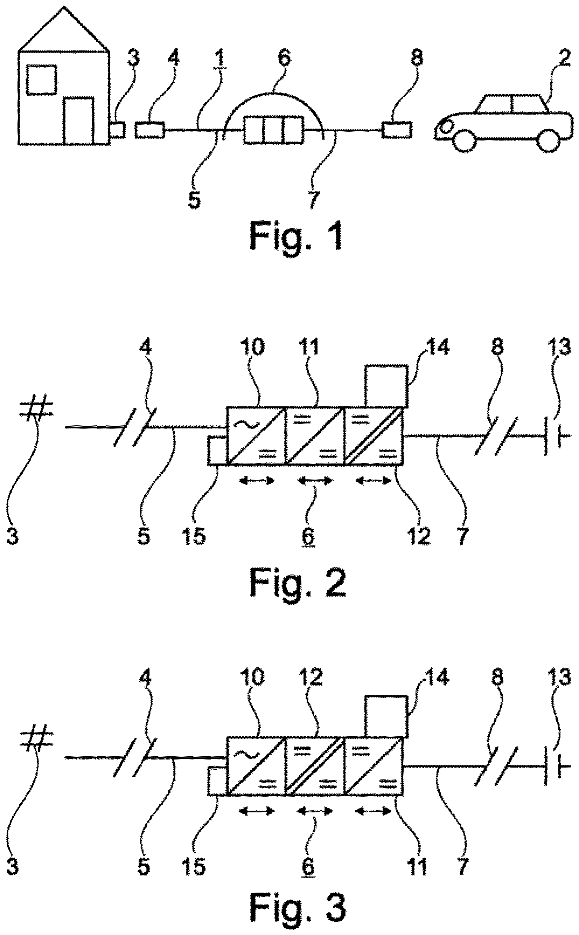

Die Figur 1 zeigt eine schematische Topologie eines Ladekabels 1 zur bidirektionalen, einphasigen Verbindung eines elektrischen Kraftfahrzeugs 2 mit einem gebäudeseitigen Niederspannungsnetz 3. Es sei hier klargestellt, dass unter einer "einphasigen Verbindung" oder einem "einphasigen Netz" nicht nur das in Europa übliche System mit einer aus einem dreiphasigen Netz gespeisten Phase und einem Nullleiter zu verstehen ist, sondern auch das zum Beispiel in den USA übliche Einphasen-Dreileiternetz (englisch: *split-phase system* oder *single-phase three-wire system*)*.*

Das Ladekabel 1 weist von der Netzseite zum Fahrzeug gesehen einen verriegelbaren Netzstecker 4 auf, der über ein dreiadriges Kabel 5 mit einer Ladeelektronik 6 verbunden ist, die weiter unten näher erläutert wird. Die Ladeelektronik 6 ist wiederum mit einem Kabel 7 mit einem verriegelbaren Stecker 8, beispielsweise einem CCS-Stecker, verbunden.

Die Ladeelektronik 6 ist in der Figur 2 näher dargestellt. Sie ist als ein fest und unverlierbar in das Kabel eingeschleiftes Modul ausgeführt und folglich einerseits gemeinsam mit den Anschlusskabeln 5 und 7 tragbar und im Kraftfahrzeug mitführbar. Andererseits kann die Ladeelektronik von einem Benutzer nicht von den Anschlusskabeln 5 bzw. 7 getrennt werden. Solche Anordnungen werden im Englischen mit den Begriffen *"in-cable charger"* oder *"in-cable controller"* bezeichnet.

Die Ladeelektronik 6 umfasst einen AC/DC-Wandler 10, der einen Anschluss an das Niederspannungsnetz, beispielsweise 230 v 50Hz, und einen Gleichspannungsanschluss von beispielsweise 350 V Gleichspannung aufweist. Der Gleichspannungsanschluss ist mit einem ersten DC/DC-Wandler 11 verbunden, der als Gleichspannungssteller ausgebildet ist und in diesem Beispiel ein Spannungsverhältnis von 1:1 bis 1:5 einstellen kann. Ausgangsseitig können also an dem ersten DC/DC-Wandler 11 200 V bis 1.000 V Gleichspannung anliegen. Diese Seite ist mit einem Eingang eines zweiten DC/DC-Wandlers 12 verbunden. Dieser zweite DC/DC-Wandler 12 ist anders als der erste DC/DC-Wandler 11 galvanisch trennend ausgebildet und weist ein Spannungsverhältnis von 1:1 auf. Alle insoweit beschriebenen Komponenten der Ladeelektronik 6 werden von einer nicht näher dargestellten Steuerung 14 gesteuert und kontrolliert. Diese Steuerung 14 ist vorzugsweise in die Ladeelektronik 6 selbst baulich integriert.

Damit ist ausgangsseitig des zweiten DC/DC-Wandlers 12 eine galvanisch getrennte Gleichspannung von 200 V bis 1.000 V verfügbar, wenn das Ladekabel an das Netz 3 angeschlossen ist und die Steuerung 14 die Spannung gewählt und freigegeben hat. Damit kann der Ladevorgang für eine Batterie 13 des Fahrzeugs 2 beginnen. Die Ladeleistung liegt etwa im Bereich von 1 kW bis 4 kW, je nach im Netz 3 verfügbarer Leistung. Über eine drahtlose oder leitungsgebundene Kommunikationsschnittstelle 15 kann die Ladeleistung gesteuert werden, beispielsweise von einem Gebäudemanagement, vom Batterielademanagement oder auch vom Netzbetreiber.

Der AC/DC-Wandler 10, der erste DC/DC-Wandler 11 und der zweite DC/DC-Wandler 12 sind bidirektional ausgebildet. Deshalb kann die Fahrzeugbatterie 13 auch netzdienlich nach der derzeit (2022) gültigen Anwendungsregel VDE AR 4105 betrieben werden. Es kann Strom aus der Batterie 13 in das Netz 3 eingespeist werden, beispielsweise für die Versorgung des Gebäudes in Spitzenlastzeiten. Es kann auch Blindleistung zur Stabilisierung des Netzes 3 zur Verfügung gestellt werden, insbesondere ohne dass Wirkleistung fließt. Bei entsprechender Ausstattung des Gebäudes kann die Fahrzeugbatterie auch eine Notstromversorgung bei Netzausfall übernehmen.

Ein weiteres Ausführungsbeispiel der vorliegenden Erfindung ist in der Figur 3 dargestellt. Diese Ausführung unterscheidet sich von der in Figur 2 dargestellten dadurch, dass der der zweite DC/DC-Wandler 12 mit dem Spannungsverhältnis von 1:1 elektrisch zwischen dem AC/DC-Wandler 10 und dem DC/DC-Wandler 11 angeordnet ist. Diese Topologie hat den Vorteil, dass der zweite DC/DC-Wandler 12, wenn er unmittelbar nach dem AC/DC-Wandler 10 geschaltet ist, auf eine relativ niedrige Zwischenkreisspannung von ca. 350V ausgelegt werden. Diese Zwischenkreisspannung ist relativ niedrig im Verhältnis zur möglichen Ladespannung für das Fahrzeug von bis zu 1.000 V. Insbesondere muss der zweite DC/DC-Wandler 12 nicht auf einen großen Spannungsbereich ausgelegt werden.

Ladevorrichtungen für elektrische Kraftfahrzeuge benötigen in der Regel eine minimale verfügbare Ladeleistung, um überhaupt in Betrieb gehen zu können. Die insoweit beschriebenen Anordnungen benötigen nur geringe minimale Ladeleistung und haben deshalb den Vorteil, dass diese auch von kleineren Photovoltaikanlagen erzeugt werden kann, die die Minimalleistung für den Betrieb von dreiphasigen Ladevorrichtungen nicht oder nicht immer liefern können.

Die einphasige Auslegung des Ladekabels 1 hat zwar zur Folge, dass die übertragenen Leistungen auf die oben genannten Werte begrenzt sind. Höhere Leistungen sind aber vielfach nicht erforderlich. Besonders vorteilhaft ist aber, dass das Ladekabel im Gegensatz zu dreiphasigen Wallboxen ohne feste, aufwändige Installation nutzbar ist und dass es transportabel und mit einem Gewicht von weniger als 5 kg tragbar ist. Die gebäudeseitige Installation beschränkt sich auf eine verriegelbare einphasige Steckdose, die an einem Endstromkreis angeschlossen wird. Das Ladekabel 1 und insbesondere die Elektronik 6 sind bei der genannten Leistung und einem möglichen Wirkungsgrad von ca. 97 % - 98 % einfach zu kühlen, entweder passiv über Kühlkörper oder über das Gehäuse, oder auch mittels eines eingebauten Lüfters, der klein dimensioniert sein kann. Als Beispiel sei genannt, dass bei einer Ladeleistung von 2 kW und einem Wirkungsgrad von 98% eine Verlustleistung von 40 W als Wärme abgeführt werden muss, was mit den genannten Maßnahmen einfach möglich ist.

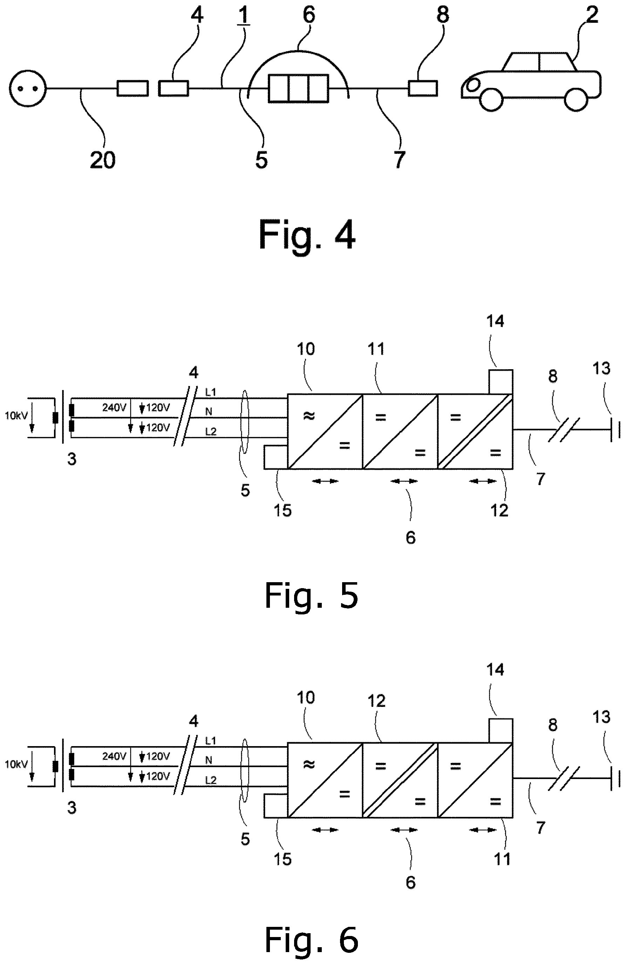

Eine weitere Ausgestaltung der Erfindung sieht vor, dass das Ladekabel in Verbindung mit einem angeschlossenen Fahrzeug als Stromquelle dient. Dies ist in der Figur 4 schematisch dargestellt. Ein Adapter 20 kann einerseits mit dem Netzstecker 4 des Ladekabels 1 verbunden sein und andererseits eine konventionelle Haushaltssteckdose oder Mehrfachsteckdose nach Art einer Kabeltrommel aufweisen. Wenn das Ladekabel 1 an das Fahrzeug 2 angeschlossen ist, kann die Elektronik 6 mit dem Fahrzeug 2 kommunizieren, was drahtlos oder drahtgebunden über die Steuerung 14 erfolgen kann. Bei einwandfreier Verbindung wird die Entladung der Fahrzeugbatterie 13 freigeben. Dazu muss nach den derzeit geltenden Vorschriften das Ladekabel 1 selbst an dem Stecker 8 eine Spannung zur Verfügung stellen. Diese kann aus einer in der Elektronik 6 vorhandenen Spannungsquelle erzeugt werden. Es kann auch vorgesehen sein, dass die Elektronik 6 hierzu einen externen Eingang, zum Beispiel für eine 12 V Spannungsquelle, aufweist. Wenn das Fahrzeug 2 die Entladung freigegeben hat, kann über das Ladekabel 1 an dem Stecker 4 und dem daran angeschlossenen Adapter 20 eine haushaltsübliche Spannung von beispielsweise 230 V 50 Hz bereitstellen. Die vorgesehene Leistung an diesem Anschluss liegt dann bei beispielsweise 2 kW, was der Leistung eines gängigen transportablen Stromerzeugers entspricht.

Die Figur 5 zeigt eine Topologie entsprechend der oben beschriebenen Figur 2. Abweichend ist die Wechselspannungsseite des bidirektionalen AC/DC-Wandlers 10 für den Anschluss an ein Einphasen-Dreileiternetz als Niederspannungsnetz 3 eingerichtet. Das Kabel 5 zum Netzanschluss weist hier drei Leiter auf, die als L1, L2 und N bezeichnet sind. Der Leiter L1 führt gegenüber Leiter N eine Wechselspannung von zum Beispiel 120 Volt. Der Leiter L2 führt gegenüber Leiter N eine Wechselspannung von zum Beispiel 120 Volt. Die Phasen der Wechselspannungen in L1 und L2 sind jedoch um 180° verschoben, so dass sich zwischen L1 und L2 eine Wechselspannung von 240 Volt ergibt. Dieses System ist in Nordamerika und anderen Staaten verbreitet.

Die Figur 6 zeigt eine Anordnung wie Figur 5, jedoch mit der Topologie aus Figur 3. Es ergeben sich hier dieselben Vorteile, wie sie zu Figur 3 oben beschrieben wurden.

Die Verwendung der Anordnung aus Fig. 5 und Fig. 6 zur Versorgung eines Gebäudenetzes im Inselbetrieb, bei dem das Ladekabel in Verbindung mit einem angeschlossenen Fahrzeug als Stromquelle dient, ist entsprechend Fig. 4 auch möglich. Dabei wird dann dem Gebäude auf der Wechselspannungsseite des AC/DC-Wandlers 10 je nach Bedarf nur Wechselspannung auf einem der Leiter L1 oder L2 gegenüber dem Neutralleiter N zur Verfügung gestellt, so dass eine Wechselspannung von z.B. 120 Volt verfügbar ist. Es kann aber auch Wechselspannung auf L1 und L2 verfügbar gemacht werden, wobei die Phasen auf den Leitern gegeneinander um 180° phasenverschoben sind. Dann sind sowohl 120 Volt als auch 240 Volt verfügbar.

## Patentansprüche

1. Einphasiges Ladekabel (1) für ein Elektrofahrzeug (2), mit einem einphasigen Netzstecker (4), mit einem in dem Elektrofahrzeug (2) verriegelbaren Ladestecker (8) und mit einer Ladeelektronik (6), die elektrisch zwischen dem Netzstecker (4) und dem Ladestecker (8) angeordnet ist, **dadurch gekennzeichnet, dass** die Ladeelektronik (6) einen bidirektionalen AC/DC-Wandler (10) und wenigstens einen bidirektionalen DC/DC-Wandler (11, 12) umfasst.

2. Ladekabel nach Anspruch 1, **dadurch gekennzeichnet, dass** die Ladeelektronik (6) in einem Gehäuse angeordnet ist, das mit einem fahrzeugseitigen Kabel (7) und mit einem netzseitigen Kabel (5) fest verbunden ist, insbesondere wasserdicht und staubdicht verbunden ist.

3. Ladekabel nach einem der vorhergehenden Ansprüche, **dadurch gekennzeichnet, dass** der Netzstecker (4) ein verriegelbarer Netzstecker ist.

4. Ladekabel nach einem der vorhergehenden Ansprüche, **dadurch gekennzeichnet, dass** der AC/DC-Wandler (10) für einen Anschluss an ein Niederspannungsnetz mit einer Phase und einer Nennspannung von 220 V bis 240 V eingerichtet ist.

5. Ladekabel nach einem der vorhergehenden Ansprüche, **dadurch gekennzeichnet, dass** der DC/DC-Wandler (11, 12) zum Anschluss an ein elektrisch betriebenes Kraftfahrzeug (2) mit einer Gleichspannung von 200 V bis 920 V eingerichtet ist.

6. Ladekabel nach einem der vorhergehenden Ansprüche, **dadurch gekennzeichnet, dass** die Ladeelektronik (6) eine Kommunikationsschnittstelle (15) zur bidirektionalen Kommunikation mit dem Kraftfahrzeug (2), insbesondere mit einem Batteriemanagementsystem des Kraftfahrzeugs, aufweist.

7. Ladekabel nach einem der vorhergehenden Ansprüche, **dadurch gekennzeichnet, dass** die Ladeelektronik (6) eine Kommunikationsschnittstelle (15) zur bidirektionalen Kommunikation mit dem Netzanschluss aufweist.

8. Ladekabel nach einem der vorhergehenden Ansprüche, **dadurch gekennzeichnet, dass** der AC/DC-Wandler (10) mit einem ersten DC/DC-Wandler (11) verbunden ist, und dass der erste DC/DC-Wandler (11) mit einem zweiten DC/DC-Wandler (12) verbunden ist.

9. Ladekabel nach einem der vorhergehenden Ansprüche, **dadurch gekennzeichnet, dass** der erste DC/DC-Wandler (11) ein galvanisch nicht trennender Gleichspannungswandler mit einem variablen Spannungsverhältnis zwischen Eingangsspannung und Ausgangsspannung von 1:3 bis 1:5 ist.

10. Ladekabel nach einem der vorhergehenden Ansprüche, **dadurch gekennzeichnet, dass** der zweite DC/DC-Wandler (12) ein galvanisch trennender Gleichspannungswandler mit einem Spannungsverhältnis zwischen Eingangsspannung und Ausgangsspannung von 1:1 bis 1:2 ist.

11. Ladekabel nach einem der vorhergehenden Ansprüche, **dadurch gekennzeichnet, dass** der zweite DC/DC-Wandler (12) ein LLC-Wandler ist.

12. Ladevorrichtung umfassend ein Ladekabel (1) nach einem der vorhergehenden Ansprüche und eine einphasige Steckdose (3), die an einen Endstromkreis angeschlossen ist.

13. Ladevorrichtung nach Anspruch 11, **dadurch gekennzeichnet, dass** die Steckdose (3) eine mechanisch oder elektrisch verriegelbare Steckdose ist.

14. Mobile Stromversorgungsvorrichtung umfassend ein Ladekabel nach einem der vorhergehenden Ansprüche 1 bis 10 und einen Adapter 20, an den wenigstens eine einphasige Steckdose angeschlossen ist.
